Europäisches Patentamt

European Patent Office

Office européen des brevets

(11) Numéro de publication: **0 459 337 A1**

## (12) DEMANDE DE BREVET EUROPEEN

(21) Numéro de dépôt: **91108555.3**

(22) Date de dépôt: **27.05.91**

(51) Int. Cl.⁵: **H04Q 7/04**, H04M 15/00

(30) Priorité: **30.05.90 FR 9006707**

(43) Date de publication de la demande:
**04.12.91 Bulletin 91/49**

(84) Etats contractants désignés:
**AT BE CH DE DK ES FR GB IT LI NL SE**

(71) Demandeur: **ALCATEL CIT**
**12 Rue de la Baume**
**F-75008 Paris(FR)**

(72) Inventeur: **Chabernaud, Christian**
**27, villa Duval**
**F-93360 Neuilly-Plaisance(FR)**

(74) Mandataire: **Weinmiller, Jürgen et al**
**Lennéstrasse 9 Postfach 24**
**W-8133 Feldafing(DE)**

(54) **Procédé d'accès d'un usager aux données d'abonnement à un service de téléphonie sans fil.**

(57) Ce procédé consiste à stocker et tenir à jour, en temps réel, dans un fichier de la base de données de référence d'un point de commande de service gestion (16), des tickets de facturation, regroupés abonnement par abonnement;

et consiste, lorsqu'un usager demande un accès à des données d'un abonnement, à :
- établir une liaison entre le terminal (8) de l'usager et un serveur (18) du point (16) de commande de service gestion, en indiquant ledit abonnement;
- authentifier l'identité dudit usager;
- envoyer une demande d'accès au serveur (18);
- lire dans la base de données de référence, les

droits d'accès de cet usager auxdites données;
- lire et modifier certaines caractéristiques dudit abonnement, sous la commande du terminal (8) de l'usager, en fonction de ses droits d'accès;
- lire des tickets de facturation dans ledit fichier, sous la commande du terminal de l'usager, en fonction de ses droits d'accès.
- exploiter les informations des tickets de facturation lus. Application à la gestion de postes téléphoniques sans fils, mis en location; notamment pour facturer le montant des taxes consommées, à l'instant où un locataire restitue un poste au loueur.

L'invention concerne un procédé d'accès aux données d'un abonnement à un service de téléphonie sans fil, ces données étant constituées essentiellement par les caractéristiques de l'abonnement et les données de facturation. Un service de téléphonie sans fil est assuré par un réseau comportant essentiellement : des stations fixes; des téléphones sans fil, reliés par radio aux stations fixes; et un réseau public commuté, numérique, à intégration de services. L'invention concerne plus particulièrement un service de téléphonie sans fil assuré par un réseau dit intelligent, qui sera décrit plus loin.

Il est envisageable de louer à des utilisateurs temporaires des postes téléphoniques sans fil, notamment lors de la location d'une voiture dans une gare ou dans un aéroport. Ce type de location peut avoir une durée très courte, par exemple 24 heures. Il peut être comparé à la location d'un poste téléphonique fixe qui est incluse dans la location d'une chambre d'hôtel. Dans le cas d'un hôtel, l'autocommutateur privé de cet hôtel comporte des compteurs individuels commandés par des signaux fournis par le réseau, de telle sorte que le montant des taxes téléphoniques consommées par un client peut être connu en temps réel. Le gérant de l'hôtel peut ainsi facturer ce montant instantanément, au moment où le client veut quitter l'hôtel. Dans le cas de postes téléphoniques sans fil, les communications passent par des stations fixes situées en des lieux divers, par conséquent un loueur ne peut pas utiliser ce procédé pour connaître le montant des taxes téléphoniques consommées par un client.

Un procédé connu de collecte des données de facturation d'un service de téléphonie sans fil, consiste à mémoriser dans chaque station fixe des tickets d'appel élaborés par cette station fixe pour les appels ayant transité par celle-ci; et consiste à lire une fois par jour ces données, et à les transmettre à un centre de gestion. Des tickets de facturation sont élaborés dans ce centre, à partir des tickets d'appel. Le délai de disponibilité des tickets de facturation, pour un usager qui souhaite connaître le montant des taxes consommées par un abonnement, est la somme des délais suivants :

- le délai de lecture des tickets d'appels dans chaque station fixe, par un centre de gestion;
- le délai d'exploitation de tous les tickets de facturation que l'abonné a pu créer dans toutes les stations fixes desservies par un centre de gestion, car la facturation doit être exhaustive;
- le délai pour rassembler tous les tickets de facturation provenant d'autres centres de gestion, si toutes les stations fixes d'un réseau ne sont pas gérées par un même centre de gestion; d'où un délai supplémentaire de transfert et un délai supplémentaire d'exploitation;
- le délai d'accès de l'usager aux tickets de facturation, via l'agence commerciale de l'opérateur du réseau.

D'autre part, les caractéristiques des abonnements ne sont pas facilement accessibles au titulaire de cet abonnement. Le titulaire d'un abonnement, qui loue à un client le poste téléphonique sans fil, objet de l'abonnement, ne peut donc pas modifier facilement les caractéristiques de l'abonnement. Pour cette raison, tous les abonnements valides ont les mêmes caractéristiques. Autrement dit, tous les abonnés ont en permanence les mêmes droits, exceptés les abonnés dont l'abonnement a été mis en opposition. Il n'est pas possible de personnaliser les droits de chaque abonné, par exemple pour interdire l'accès au réseau téléphonique international; ou pour fixer un plafond empêchant l'usage du poste téléphonique lorsque le montant des taxes consommées a atteint ou a dépassé le plafond; ou bien pour arrêter cet usage à une date prédéterminée autre que la date de fin de validité de l'abonnement.

Le but de l'invention est de proposer un procédé qui puisse être mis en oeuvre dans un réseau intelligent, et qui permette à un usager d'accéder très rapidement aux données d'un abonnement, au moyen d'un terminal courant, connecté au réseau public commuté; et qui permette de contrôler cet accès pour assurer la sécurité des données.

Selon l'invention, un procédé d'accès d'un usager aux données d'un abonnement à un service de téléphonie sans fil, ce service étant assuré par un réseau comportant :
- un réseau de distribution constitué par des stations fixes et des téléphones numériques, sans fil, reliés par radio aux stations fixes;
- un réseau public commuté, numérique, à intégration de services, auquel est reliée chaque station fixe;
- des points de commande de service réseau, reliés au réseau commuté, et comportant chacun une base de données d'abonnés au service de téléphonie sans fil, et un dispositif logique de traitement d'appels, établissant un ticket d'appel à la fin de chaque communication téléphonique;
- un point de commande de service gestion traitant chaque ticket d'appel pour établir un ticket de facturation; et comportant une base de données de référence, stockant les caractéristiques de chaque abonnement et tous les tickets de facturation;

est caractérisé en ce qu'il consiste à stocker et tenir à jour, en temps réel, dans un fichier de la base de données de référence du point de commande de service gestion, des tickets de facturation, regroupés abonnement par abonnement;

et en ce que, lorsqu'un usager demande un accès à des données d'un abonnement, il consiste alors à :

- établir une liaison entre l'usager et un serveur du point de commande service gestion, au moyen d'un terminal connecté au réseau public commuté, en indiquant ledit abonnement;
- authentifier l'identité dudit usager;
- lire dans la base de données de référence, quels sont les droits d'accès de cet usager aux données dudit abonnement;
- lire les tickets de facturation dudit abonnement dans ledit fichier, sous la commande du terminal de l'usager, en fonction de ses droits d'accès;
- exploiter les informations des tickets de facturation lus.

Le procédé ainsi caractérisé permet un accès très rapide aux tickets de facturation puisqu'ils sont élaborés dans le point de commande de service gestion à partir de tickets d'appels qui sont établis en temps réel, à la fin de chaque communication téléphonique; puisque chaque ticket de facturation est regroupé en temps réel dans un fichier, abonnement par abonnement; et puisqu' un usager peut accéder aux tickets de facturation d'un abonnement au moyen d'un terminal connecté au réseau public commuté.

Selon une autre caractéristique, le procédé selon l'invention consiste, en outre, à lire et modifier certaines caractéristiques dudit abonnement, sous la commande du terminal de l'usager, en fonction de ses droits d'accès.

Le procédé ainsi caractérisé permet à un usager un accès très rapide à certaines caractéristiques de son abonnement, parce qu'elles sont accessibles dans la base de données de référence du point de commande de gestion, et parce qu'il suffit d'utiliser un simple terminal connecté au réseau public commuté.

Selon un mode de mise en oeuvre, le procédé selon l'invention consiste à exploiter les informations des tickets de facturation dans le point de commande de service gestion ; puis à transmettre les résultats de l'exploitation au terminal de l'usager.

Le procédé ainsi caractérisé permet à l'usager de connaître, par exemple, le nombre des taxes consommées, sans devoir utiliser un terminal intelligent, capable de calculer ce nombre à partir des tickets de facturation. Il permet donc d'utiliser comme terminal un simple terminal ASCII ou un simple terminal vidéotex, appelé communément minitel.

Selon un autre mode de mise en oeuvre, le procédé selon l'invention consiste à exploiter les informations des tickets de facturation, dans le terminal de l'usager, ce terminal étant du type terminal intelligent et comportant un logiciel pour trier les informations contenues dans les tickets de facturation et pour les exploiter.

Le procédé ainsi caractérisé permet à chaque usager de personnaliser à sa guise le traitement appliqué aux tickets de facturation, par exemple en vue d'établir une facture pour un locataire de poste téléphonique sans fil.

Le procédé caractérisé dans la revendication 5 permet un accès particulièrement facile même par un usager sans compétence particulière.

Le procédé caractérisé dans la revendication 6 permet d'authentifier l'identité de l'usager, pour assurer une certaine sécurité aux données de l'abonnement.

Le procédé caractérisé dans la revendication 7 permet d'authentifier l'identité de l'usager avec une sécurité améliorée.

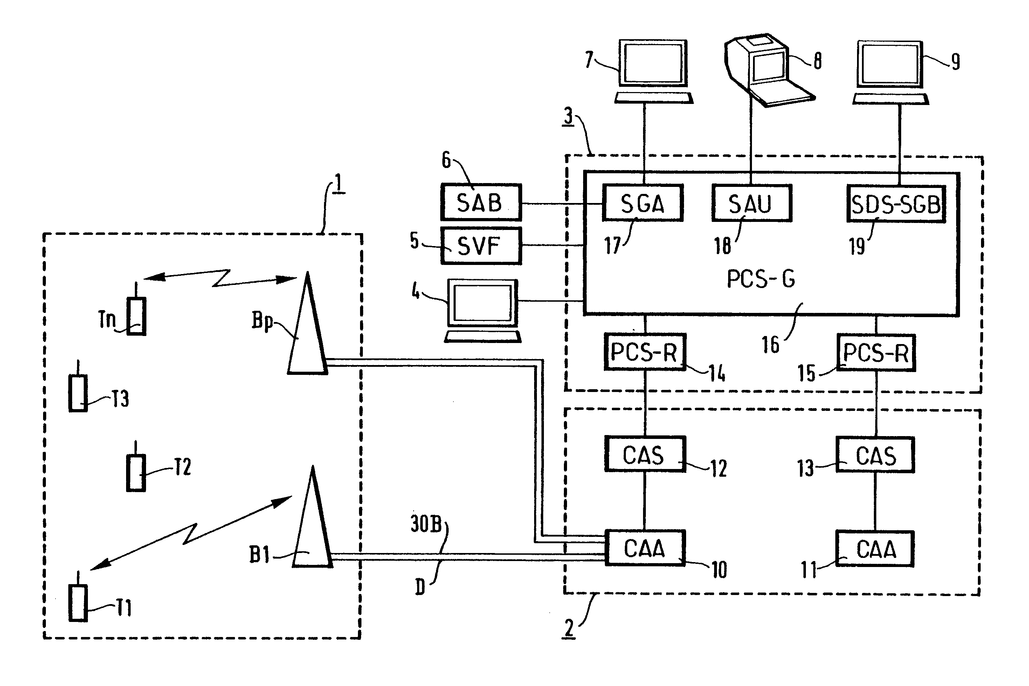

L'invention sera mieux comprise et d'autres détails apparaîtront à l'aide de la description ci-dessous, d'un exemple de mise en oeuvre du procédé selon l'invention, et de la figure l'accompagnant, qui représente le schéma synoptique d'un exemple de réseau intelligent de téléphonie sans fil, pour la mise en oeuvre du procédé selon l'invention.

Il comporte : un réseau de distribution 1; un réseau public commuté 2, numérique, à intégration de services ; un réseau de points de commande de service, 3; un système de gestion d'abonnés 6; un système de valorisation et de facturation 5; et des unités d'exploitation 4, 7, 8, 9.

Le réseau de distribution 1 comprend des téléphones numériques portatifs, sans fil, T1,...,Tn, et des stations fixes B1,...,Bp. Chaque téléphone peut être relié par radio à une station fixe située à proximité de ce téléphone, chaque station fixe pouvant desservir simultanément plusieurs téléphones, par exemple 40 téléphones. Chaque station fixe B1,...,Bp est reliée par un câble au réseau public commuté 2. Chaque accès au réseau 2 est un accès normalisé qui comporte un canal de signalisation d'usager à usager, noté D, et plusieurs canaux téléphoniques. Le nombre de canaux téléphoniques peut être égal à 30 par exemple, et ils sont notés 30B. Dans cet exemple, chaque téléphone mobile est astreint à rester près d'une même station fixe pendant toute la durée d'une communication, mais l'invention est applicable aussi à un réseau permettant le transfert d'une communication d'une station fixe à une autre station fixe voisine pour permettre un déplacement des téléphones mobiles en cours de communication.

Le réseau public commuté 2, est constitué de centres à autonomie d'acheminement (CAA) et de commutateurs d'accès au service (CAS). Cet exemple de réseau comporte deux centres à autonomie d'acheminement, 10 et 11, reliés respectivement à deux commutateurs d'accès au service, 12 et 13, par des liaisons conformes au protocole n° 7 du CCITT. Dans cet exemple, les stations fixes B1,...,Bp sont reliées au centre à autonomie d'acheminement 10. Le réseau 3 de points de commande de service comporte, dans cet exemple, deux points de commande de service réseau (PCS-R) 14 et 15; un point de commande de service gestion (PCS-G) 16. Les points de commande de service réseau 14 et 15 sont reliés respectivement aux commutateurs d'accès au service, 12 et 13, par des liaisons conformes au protocole n°7 du CCITT; et sont reliés au point de commande de service gestion 16 par des liaisons conformes au protocole X25 du CCITT. Les systèmes 5 et 6, et les unités d'exploitation 4, 7, 8, 9 sont reliés au point de commande de service gestion 16 par des liaisons conformes au protocole X25 du CCITT.

Chaque unité d'exploitations 4, 7, 8, 9 est constituée essentiellement d'un terminal écran-clavier. Les terminaux 4, 7, 9 sont affectés à différentes équipes d'exploitation, le point de commande de service gestion 16 fournissant à chaque équipe les informations et les moyens de dialogue. Le terminal 4 est affecté à l'exploitant technique du réseau intelligent. Le terminal 9 est affecté à un exploitant technique de l'ensemble des stations fixes ou d'un parc de stations fixes particulier. Il accède à la base de données du point de commande de service gestion 16, par un serveur de gestion de stations fixes (SGB) et par un serveur de statistiques (SDS), 17. Le terminal 7 est affecté à l'exploitant commercial du service de téléphonie sans fil. Il accède au point de commande de service gestion 16 par un serveur de gestion d'abonnés (SGA) 17 qui est relié aussi au système de gestion des abonnés 6.

Le terminal 8 est relié temporairement au réseau, c'est un terminal vidéotex, appelé communément minitel, utilisé par un abonné souhaitant accéder aux données de son abonnement pour modifier des caractéristiques de l'abonnement ; ou pour lire des tickets de facturation ou le montant des taxes consommées. Il accède au point de commande de service gestion 16 par un serveur d'accès d'usagers (SAU) 18.

Un appel d'un utilisateur du réseau public 2, pour un service, est analysé dans l'un des commutateurs d'accès au service 12 ou 13, puis est transmis au point de commande de service réseau, 14 ou 15, desservant ce commutateur. Ce point de commande de service réseau pilote alors l'ensemble du traitement d'appels et commande le commutateur d'accès au service pour toutes les actions nécessitant des ressources de commutation. Par exemple : pour l'envoi d'une annonce vocale, ou pour établir une connexion entre une entrée du réseau et une sortie du réseau, ou pour réaliser une temporisation. Pour traiter chaque appel, un point de commande de service réseau dispose d'un logiciel pour chaque service, organisé sous forme d'enchaînement d'actions élémentaires, en fonction de messages reçus. Il dispose en outre d'une base de données mise à jour en temps réel.

Le point de commande de service gestion 16 n'est pas concerné par le traitement d'appels. Il constitue une référence pour le service car il comporte une base de données contenant les logiciels du service et contenant les données concernant les abonnements. Il assure l'exploitation technique du réseau de stations fixes B1,...Bp, et du réseau de points de commande de service réseau, 14 et 15, notamment en maintenant la cohérence des bases de données; et il assure l'exploitation commercial du service : accès de l'exploitant; accès des abonnés; gestion des bases de données d'abonnement; traitement des tickets d'appel pour élaborer des tickets de facturation.

Les points de commande 14 à 16 peuvent être constitués par exemple d'un multiprocesseurs ALCATEL8300, commercialisé par la société ALCATEL.

Les points de commande de service réseau, 14 et 15, sont utilisés pour mettre en oeuvre le procédé d'accès au service de téléphonie sans fil. Chacun comporte une base de données d'abonnés au service de téléphonie sans fil. Cette base contient des données correspondant à une partie des abonnés ou à tous les abonnés au service. Elle ne contient que des caractéristiques utiles au traitement des appels. Elle ne contient pas toutes les caractéristiques qui sont stockées dans la base de données du point de commande de service gestion 16. La mise à jour des données est faite par le point de commande de service gestion 16, quasi simultanément dans toutes les bases de données des points de commande de service réseau, 14 et 15, dès que le point de commande de service gestion 16 est informé d'une modification relative aux abonnés, par l'intermédiaire de l'un des centres d'exploitation 4, 7, 8, 9.

La base de données du point de commande de service gestion 16, contient pour un abonné, notamment :
- une valeur désignant l'abonnement;
- une valeur désignant le service et l'opérateur du service objet de l'abonnement;
- le type d'abonnement : international, autorisant tous les appels; ou national, autorisant les appels dans un seul pays; ou sélection, autorisant une liste de dix numéros prédéterminés;
- les dix numéros dont l'accès est autorisé à cet abonné, si c'est un abonnement du type sélection;

- le plafond du débit de son compte, si une fonction de limitation automatique est implantée dans le point de commande service gestion 16;
- la date de fin de validité de l'abonnement.

La base de données du point de commande de service gestion 16 est un sous-ensemble de la base de données du système de gestion des abonnés 6, et la cohérence entre ces deux bases de données est maintenue en coordonnant les mises à jour d'une base de données à l'autre. L'exploitant commercial réalise, à l'aide de son terminal 7 et du serveur de gestion 17, des mises à jour telles que :

- création d'abonnements;
- suppression d'abonnements;
- mise en opposition et retrait d'opposition à des abonnements;
- mise en observation et retrait d'observation pour des abonnements;
- modification des caractéristiques des abonnements (type d'abonnement, liste des numéros autorisés, une valeur identifiant un téléphone portable, date de fin de validité, etc.)

Une mise à jour peut être réalisée à l'initiative du point de commande de service gestion 16 pour mettre en opposition un abonnement dans certains cas, tels que le dépassement d'un plafond de débit du compte de facturation d'un abonnement, si cette fonction est implantée dans ce point de commande, et si l'abonné a souscrit pour cette option.

Le titulaire d'un abonnement au service de téléphonie sans fil, peut lui aussi modifier certaines caractéristiques de cet abonnement, en connectant son terminal vidéotex 8 au réseau public commuté, et en établissant une liaison avec le serveur d'accès des usagers, 18, qui est un sous-ensemble du serveur de gestion des abonnés 17. Ces deux serveurs réalisent les mêmes traitements, cependant un usager quelconque a des droits d'accès beaucoup plus limités que ceux de l'exploitant commercial du réseau.

Par exemple, si l'usager est un loueur de téléphone sans fil, il est intéressant pour lui de pouvoir :

- valider un poste téléphonique (instantanément ou en différé);
- invalider un poste téléphonique (instantanément ou en différé);
- limiter la consommation à un plafond prédéterminé pour une durée déterminée (si cette fonction est implantée dans le point de commande de service gestion 16);
- modifier les droits conférés par l'abonnement (la liste des services accessibles).

Mais surtout, il est intéressant pour l'usager d'accéder aux données de facturation pour :

- connaître le nombre de taxes consommées par un abonnement, sur une période donnée;

- établir un relevé détaillé des consommations, communication par communication.

L'exploitant commercial du réseau n'a besoin des données de facturation qu'en temps différé. Classiquement, les données de facturation sont transférées au système de valorisation et de facturation 5 sous la forme d'une bande magnétique, pour établir en temps différé des factures détaillées périodiques, par exemple tous les deux mois.

Lorsque le procédé selon l'invention est mis en oeuvre, le point de commande de service gestion 16 offre un service de facturation rapide aux abonnés qui ont souscrits à ce service. Ce service permet : soit l'accès aux tickets de facturation, si l'usager dispose d'un terminal intelligent muni d'un logiciel pour calculer le montant de la facturation, et faire éventuellement d'autres traitements, à partir des tickets de facturation; soit le calcul du nombre des taxes consommées par l'abonnement, et le listage des communications, sur une période indiquée par l'usager, ce traitement étant fait dans le serveur 18 d'accès des usagers, si l'usager ne dispose que d'un terminal simple.

Le service de facturation en temps différé utilise des tickets de facturation établis par le point de commande de service gestion 16, en temps réel, à partir des tickets d'appels envoyés par les points de commande de service réseau, 14 et 15, à la fin de chaque communication. Chaque ticket de facturation comporte notamment :

- une valeur identifiant l'abonnement;
- une valeur identifiant le service de téléphonie sans fil;
- le numéro appelé, la date et l'heure de la communication;
- la durée de la communication;
- le nombre de taxes de base;
- le numéro identifiant la station fixe utilisée;
- la classe de consommation de l'abonnement, déterminant un plafond de consommation hebdomadaire ou mensuelle.

Le nombre de taxes consommées pour un appel est calculé en fonction de plusieurs critères tels que la localisation du demandeur, la localisation du demandé, l'heure du début et l'heure de la fin de l'appel, les tarifs en vigueur, et le type d'appel. Ces informations sont transmises par les centres d'accès au service, 12 et 13, vers le point de commande de service gestion 16, par les canaux de signalisation.

Le point de commande de service gestion 16 effectue sur ces tickets de facturation les traitements suivants :

- des contrôles syntaxiques;
- un formatage;
- un tri par abonnement;
- la préparation d'une bande magnétique qui mémorise tous les tickets de facturation pour les transmettre au système de valorisation et de facturation 5 en vue de la facturation différée;

- l'élaboration d'un ticket dit de facturation rapide, uniquement pour les abonnements bénéficiant du service de facturation rapide, et stockage de ce ticket, abonnement par abonnement, dans un fichier.

Le ticket de facturation rapide contient à peu près les mêmes informations que le ticket de facturation destiné à la facturation en temps différé, mais il n'est pas destiné au même usage. Les tickets de facturation rapide sont mémorisés dans la base de données du point de commande de service gestion 16 en étant regroupés dans un fichier organisé abonnement par abonnement, et consultable rapidement par le serveur d'accès des usagers 18. Il est à remarquer que l'élaboration des tickets de facturation rapide et leur exploitation, ne concerne qu'une petite minorité des abonnements, ce qui rend tolérable le surplus de travail qu'ils occasionnent au point de commande de service gestion 16 et au système de gestion des abonnés 6.

Au moment où un usager établit une liaison avec le serveur 18, son identité est authentifiée au moyen d'un mot de passe confidentiel qu'il tape sur le clavier de son terminal 8 et qui est transmis au serveur d'accès des usagers, 18. Le mot de passe envoyé par l'usager est comparé à un mot de passe de référence qui est associé à l'abonnement considéré, et qui est stocké dans la base de données du service gestion 16. Son identité est authentifiée si le mot de passe envoyé est identique au mot de passe de référence.

Il est possible de prévoir plusieurs mots de passe différents, associés à un même abonnement, respectivement pour plusieurs usagers autorisés à accéder aux données de cet abonnement, avec éventuellement des droits d'accès différents. Dans ce cas, la base de données mémorise plusieurs mots de passe et plusieurs tables de droits d'accès, associées respectivement aux mots de passe, pour l'abonnement concerné; et la procédure d'authentification consiste à comparer le mot de passe envoyé par un usager, à chacun des mots de passe associés à l'abonnement indiqué, puis à consulter la table des droits d'accès associée au mot de passe de l'usager.

Selon une variante de mise en oeuvre, le terminal 8 de l'usager comporte un lecteur de carte à puce et l'usager est doté d'une carte à puce comportant un dispositif de calcul selon un algorithme cryptologique. Ce dispositif de calcul mémorise une clé secrète propre à l'usager. L'usager introduit sa carte à puce dans le lecteur associé au terminal 8. Le serveur d'accès des usagers 18 envoie un nombre aléatoire à la carte à puce.

Celle-ci calcule une signature en fonction de ce nombre aléatoire et en fonction de la clé secrète, puis envoie cette signature au serveur 18, via le terminal. Le serveur 18 calcule une signature de référence, au moyen du même nombre aléatoire et au moyen d'une clé secrète associée à l'abonnement et mémorisée dans la base de données du point de commande de service de gestion 16. Si la signature envoyée est identique à la signature de référence, l'identité de l'usager est authentifiée. Cette variante de mise en oeuvre présente l'avantage d'une plus grande sécurité puisqu'aucune information confidentielle ne circule entre le terminal 8 et le serveur 18.

La base de données du point de commande de service gestion 16 contient au moins une table de droits d'accès pour chaque abonnement. Lorsqu'un usager émet une demande d'accès aux données de son abonnement, le serveur 18 authentifie l'identité de l'usager; puis consulte la table des droits d'accès correspondant à l'usager puis guide l'usager vers les données accessibles en fonction de cette table; en indiquant les données accessibles en lecture seulement et les données accessibles en lecture ou en écriture. L'usager demande alors à accéder en lecture ou en écriture à certaines de ces données.

Le serveur 18 prend en compte la demande d'accès en lecture ou en écriture, pour les données accessibles. Il envoie au terminal 8 un accusé de modification effectuée si c'est une demande d'accès en écriture et si elle est traitée immédiatement. Le serveur 18 peut offrir à l'usager la possibilité de différer l'exécution d'une modification, en précidant la date et l'heure de l'exécution. Il envoie alors au terminal 8 de l'usager un accusé de prise en compte, indiquant que l'exécution sera différée.

Lorsqu'un usager demande à accéder aux données de facturation d'un abonnement, le serveur d'accès des usagers, 18, lit, dans les données de l'abonnement, quelle option a été choisie dans le contrat d'abonnement. L'usager peut choisir entre deux options pour exploiter les tickets de facturation rapide : les traiter dans le serveur 18; ou les traiter dans le terminal 8 de l'usager.

Si l'usager est muni d'un terminal simple, ce dernier ne peut pas traiter les tickets de facturation. L'usager doit opter pour la première option et il doit se contenter de traitements prédéterminés qui couvrent les besoins essentiels des usagers : le calcul du nombre total des taxes consommées pendant une période donnée, et la liste des communications, avec leur coût, pendant cette période donnée. La réalisation des logiciels pour ces traitements est à la portée de l'homme de l'art. Le serveur d'accès des usagers, 18, calcule le nombre des taxes consommées par un abonnement, en additionnant les nombres de taxes indiqués dans les tickets de facturation rapide de cet abonnement, ayant une date comprise entre deux stations fixes indiquées par l'usager.

Si l'usager est muni d'un terminal intelligent, par exemple un ordinateur personnel, et si celui-ci est chargé avec un logiciel adéquat, l'usager peut choisir de réaliser dans son terminal les traitements de facturation à partir des tickets de facturation rapide. La réalisation de ce logiciel est à la portée de l'homme de l'art. Par exemple, le logiciel trie selon la date et l'heure d'appel, les informations contenues dans les tickets de facturation, calcule le nombre puis le montant total des taxes, liste les communications, et édite une facture. La réalisation du traitement dans le terminal de l'usager permet à cet usager de personnaliser à sa guise le traitement appliqué aux tickets de facturation, en vue de faire une facture pour le locataire du poste téléphonique; ou en vue de faire des statistiques; ou en vue d'autres utilisations.

**Revendications**

1. Procédé d'accès d'un usager aux données d'un abonnement à un service de téléphonie sans fil, ce service étant assuré par un réseau comportant :
   - un réseau de distribution (1) constitué par des stations fixes (B1,...,Bp) et des téléphones numériques (T1,...,Tn), sans fil, reliés par radio aux stations fixes;
   - un réseau public commuté (2), numérique, auquel est reliée chaque station fixe;
   - des points de commande de service réseau (14, 15), reliés au réseau commuté (2) et comportant chacun une base de données d'abonnement au service de téléphonie sans fil, et un dispositif logique de traitement d'appels, établissant un ticket d'appel à la fin de chaque communication téléphonique;
   - un point de commande de service gestion (16) traitant chaque ticket d'appel pour établir un ticket de facturation; et comportant une base de données de référence, stockant les caractéristiques de chaque abonnement et tous les tickets de facturation;

   caractérisé en ce qu'il consiste à stocker et tenir à jour, en temps réel, dans un fichier de la base de données de référence du point de commande de service gestion (16), des tickets de facturation, regroupés abonnement par abonnement; et en ce que, lorsqu'un usager par un terminal (8) connecté au réseau public commuté (2) demande un accès à des données d'un abonnement, en désignant ledit abonnement il consiste alors à :
   - établir une liaison entre le terminal de l'usager et un serveur (18) du point (16) de commande service gestion; en indiquant ledit abonnement;
   - authentifier l'identité dudit usager;
   - lire des tickets de facturation dudit abonnement, dans ledit fichier, sous la commande du terminal (8) de l'usager, en fonction de ses droits d'accès;
   - exploiter les informations des tickets de facturation lus.

2. Procédé selon la revendication 1, caractérisé en ce qu'il consiste, en outre, à lire et modifier certaines caractéristiques dudit abonnement, sous la commande du terminal (8) de l'usager, en fonction de ses droits d'accès.

3. Procédé selon la revendication 1, caractérisé en ce qu'il consiste à exploiter les informations des tickets de facturation, dans le point de commande de service gestion (16); puis à transmettre les résultats de l'exploitation au terminal (8) de l'usager.

4. Procédé selon la revendication 1, caractérisé en ce qu'il consiste à exploiter les informations des tickets de facturation dans le terminal (8) de l'usager, ce terminal étant du type terminal intelligent et comportant un logiciel pour exploiter les informations contenues dans les tickets de facturation.

5. Procédé selon l'une des revendications 1 ou 2, caractérisé en ce que, pour lire et modifier certaines caractéristiques dudit abonnement, ou pour lire les tickets de facturation, en fonction des droits d'accès de l'usager, il consiste à :
   - indiquer à l'usager quelles sont les données accessibles en lecture, et celles accessibles en écriture, en fonction de ses droits d'accès;
   - prendre en compte une demande d'accès émise par le terminal (8) de l'usager, pour une lecture ou une écriture de données accessibles;
   - envoyer au terminal (8) un accusé de modification effectuée si c'est une demande d'accès pour une écriture et si elle est traitée immédiatement;
   - envoyer au terminal (8) un accusé de prise en compte si c'est une demande d'accès pour une écriture et si elle est traitée en temps différé.

6. Procédé selon l'une des revendications 1 ou 2, caractérisé en ce que pour authentifier l'identité dudit usager, il consiste à :

- transmettre dudit terminal (8) au point (16) de commande de service gestion, un mot de passe propre à l'usager;
- lire, dans la base de données du point (16) de commande de service gestion, au moins un mot de passe associé audit abonnement;
- vérifier que le mot de passe transmis correspond à un mot de passe associé à l'abonnement.

7. Procédé selon la revendication 1, caractérisé en ce que pour authentifier l'identité de l'usager, il consiste à :

- déterminer dans une carte à puce, reliée au terminal (8), une première signature en fonction d'un nombre aléatoire et en fonction d'une clé secrète propre à l'usager, et transmettre la première signature au point de commande de service gestion (16);

et en ce qu'il consiste, dans le point (16) de commande de service gestion à :

- lire, parmi les données dudit abonnement, dans la base de données de référence, la clé secrète associée audit abonnement;
- calculer une seconde signature, en fonction de la clé secrète lue parmi les données dudit d'abonnement, et en fonction dudit nombre aléatoire;
- comparer la première et la seconde signature, l'usager étant authentifié si et seulement si elles sont identiques.

EP 0 459 337 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | COMMUTATION ET TRANSMISSION no. 2, 1989, PARIS (FR) pages 5 - 22; J.DUNOGUE ET AL: 'DU CONCEPT A L'APPLICATION DU RESEAU INTELLIGENT Architecture et équipeme nts d'Alcatel ' * page 7, colonne de droite * * page 8, colonne de droite * * page 10 EP 91108555030* * page 14, colonne de droite - page 16 * * page 16, colonne de droite - page 19 * * page 21 * | 1-7 | H 04 Q 7/04 H 04 M 15/00 |
| | − − − | | |
| Y | EP-A-0 358 408 (AT&T) * colonne 1, ligne 13 - ligne 27 * * colonne 2, ligne 40 - colonne 5, ligne 46 * * colonne 6, ligne 30 - ligne 57 * * colonne 8, ligne 1 - colonne 9, ligne 17 * * colonne 10, ligne 49 - colonne 11, ligne 15 * | 1-5 | |
| | − − − | | |
| Y | INTERNATIONAL SWITCHING SYMPOSIUM vol. 6, 28 Mai 1990, STOCKHOLM (SE) pages 187 - 193; M.GRENZHAUSER ET AL: 'THE DIGITAL MOBILE SYS-TEM D900 - A STEP TOWARDS THE TELECOMMUNICA-TION MA NAGEMENT AND INTELLIGENT NETWORK AR-CHITECTURE ' * page 188 * * page 190, alinéa 6 - page 191, alinéa 7 * | 1,6,7 | |
| | − − − | | **DOMAINES TECHNIQUES RECHERCHES (Int. Cl.5)** |
| A | ELECTRICAL COMMUNICATION vol. 63, no. 4, 1989, BRUSSELS (BE) pages 389 - 399; M.BALLARD ET AL: 'Cellular Mobile Radio as an Intelligent Network Application ' * page 392, colonne de droite, ligne 1 - page 393, colonne de droite, ligne 5 * | 1,6,7 | H 04 Q H 04 M |
| | − − − | | |
| A | ELECTRICAL COMMUNICATION vol. 63, no. 4, 1989, BRUSSELS (BE) pages 337 - 344; S. GOERLINGER ET AL: 'Implementation of the Intelligent Network in France ' − − − | | |
| | −/− | | |

Le présent rapport de recherche a été établi pour toutes les revendications

| Lieu de la recherche | Date d'achèvement de la recherche | Examinateur |
|---|---|---|
| La Haye | 04 septembre 91 | GERLING J.C.J. |

**Office européen des brevets**

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 367 361 (GTE MOBILNET INC.)<br>- - - - - | | |

**DOMAINES TECHNIQUES RECHERCHES (Int. Cl.5)**

Le présent rapport de recherche a été établi pour toutes les revendications

| Lieu de la recherche | Date d'achèvement de la recherche | Examinateur |
|---|---|---|
| La Haye | 04 septembre 91 | GERLING J.C.J. |

CATEGORIE DES DOCUMENTS CITES
X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons
-------------------------------------------------------------------
& : membre de la même famille, document correspondant